# EUROPEAN PATENT SPECIFICATION

(11) **EP 0 328 583 B1**
(45) Date of publication and mention of the grant of the patent: **30.08.1995**
(21) Application number: 88906584.3
(22) Date of filing: 10.06.1988
(51) Int. Cl.: C22C 26/00, C09K 3/14, B22F 7/06, E21B 10/46, B23P 15/32, B24D 18/00, C04B 41/45, C04B 41/52

(54) **IMPROVED COATED PCD ELEMENTS AND PRODUCTS AND METHODS**
BESCHICHTETE POLYKRISTALLINE DIAMANTKÖRPER, PRODUKTE UND IHRE HERSTELLUNG
ELEMENTS DE PCD (PRODUIT DIAMANTAIRE POLYCRISTALLIN) ENROBES AMELIORES, PRODUITS ET PROCEDES

(30) Priority: 11.06.1987 US 61705; 15.09.1987 US 95054
(43) Date of publication of application: 23.08.1989
(73) Proprietor: BAKER-HUGHES INCORPORATED, Houston Texas 77210-4740 (US)
(72) Inventor: CHEN, Sy-Hwa, Salt Lake City, UT 84121 (US); MERRILL, Leo, Orem, UT 84059 (US); BIGELOW, Louis, Kim, Salt Lake City, UT 84124 (US); SUNG, Chien-Min, Sandy, UT 84070 (US)
(74) Representative: DIEHL GLAESER HILTL & PARTNER
(86) International application number: US8802037
(87) International publication number: WO8809826

(56) References cited:
- EP-A- 0 046 374
- EP-A- 0 264 674
- BE-A- 460 350
- FR-A- 2 169 577
- US-A- 2 210 039

## Description

### Field of Invention

The present invention relates to an improved synthetic diamond product and method of making the same and more particularly to an improved temperature stable diamond element which may be and chemically bonded to a support structure such as a drill bit and the like.

### Background of the Invention

Various types of synthetic diamond products are known and commercially available. One such product is an unleached polycrystalline diamond compact, having a temperature stability of up to about 750 degrees C, see United States Patents 3,745,623 and 3,608,818. This synthetic diamond product is usually formed by diamond-to-diamond bonds and is bonded to a substrate which may be cemented tungsten carbide, for example. The substrate is usually preformed and contains cobalt, the diamond product being formed and affixed to the substrate at very high temperatures and pressures, usually referred to as the diamond stable region of pressure and temperature, typically above 50 kbar and 1,200 degrees C.

These products are referred to herein as a polycrystalline diamond product ("PCD") and are thermally stable to about 750 degrees C.

Another form of PCD is an unbacked leached product, see United States Patents 4,224,380 and 4,288,248, which has a temperature stability of up to 1,200 degrees C. Such a PCD product can withstand the relatively high temperatures used to form a supporting matrix with a binder alloy and is referred to herein as a "TSPCD". The term "matrix" is used to describe the powder and binder material which is placed around or in contact with the TSPCD element and which is processed in accordance with this disclosure.

As will be hereinafter described, this matrix may, for instance, be formed either by a highly compacted ceramic powder sometimes referred to as a "matrix carrier", such as might be used as a cutter for an earth boring bit, or of a non-compacted ceramic powder, such as might be used for the body of earth boring bit. In either case the final matrix is formed by infiltration with a molten binder alloy or by solid state sintering.

Typical leached TSPCD elements are those available under the trademark GEOSET® while a typical unleached TSPCD element is that available under the trademark SYNDAX®. The TSPCD element are available in a wide variety of shapes and sizes, for example, triangular, square, cylindrical with flat ends or pointed at one end, round discs, rectangular, ovoid, and the like.

EP-A 264 674 which as far as it is based on the priority of US 921 364 of October 20, 1986, is prior art according to Article 54(3) EPC. This reference describes a temperature stable synthetic polycrystalline diamond product having a temperature stability up to about 1200°C, wherein the diamonds which are held together by a metal matrix carrier are coated in a thickness between 1 and 10 »m with a uniform coating of a metal which is a carbide former. This reference also discloses a method for forming such diamond products.

In US-A 2 210 039 a method is disclosed in which a mass of diamond pieces and tungsten metal powder is heated substantially by itself at a temperature in general below 1149°C for a period of time sufficient to form a film or layer containing tungsten metal and tungsten carbide. In a further separate step the mass of metallic tungsten particles and diamonds having a layer of tungsten metal and tungsten carbide is heated to a temperature in the neighbourhood of 1149°C in contact with a brazing material such as German silver having a melting temperature below that temperature so that the brazing material is caused to melt and flow by capillary action into the interstices of the mass to bond the whole together. This achieves a bond between the tungsten carbide and tungsten metal containing surface layer on the diamonds and the particles of tungsten metal and between the tungsten metal particles themselves.

In FR-A 2 169 577 an abrasive product is disclosed which contains different groups of abrasive particles--a group of particles of greater hardness i.e. diamond particles, a group of other particles selected from alumina, tungsten carbide or silicon carbide--which are surrounded by a metallic matrix of a brazing material. The diamonds and preferably also other abrasive particles after having been surface treated are covered with a layer of tungsten, tantal, niobium or molybdenum whereby the thickness of a tungsten layer on diamond is reported as being about 2.5 to 25 »m. The covered and uncovered abrasive particles are granulated with a brazing metal powder, preferably of the bronze type having a melting point below 1090°C or powders of other brazing metals having a melting point below 835°C, to form little spheres or balls containing the abrasive grains inside and being covered with a shell of powder. A die is filled with these spheres or balls, further pulverised brazing metal powder is added and by means of infiltration or hot pressing the abrasive products are made. The brazing material is mentioned to provide a metallurgical bond to the cover of the covered abrasive particles.

The present invention provides an earth boring bit which strongly bonds at least one TSPCD according to independent claim 1, a method for forming a temperature stable diamond produced according to independent claim 13 and methods for making a tool according to independent claim 17 or 18. Further advantageous features and aspects of the invention are evident from the dependent claims.

In accordance with the present invention a TSPCD product is provided which is capable of being strongly chemically bonded to a support structure with the use of relatively low temperatures and pressures. In general the method of the present invention includes the steps of coating a TSPCD element with a carbide forming refractory transition metal, preferably tungsten, tantalum or molybdenum, and most preferably tungsten. Less preferably, a double layer coating such as tungsten/titanium or tungsten/ chromium or nickel/titanium may be used. Thereafter, the coated TSPCD is heated in a vacuum or inert or reducing atmosphere under carbide forming conditions, to form a carbide inner layer on the portion of the coating in contact with the TSPCD to chemically bond the coating to the TSPCD. The dimension of the carbide forming layer should, in general, be in the range of about 10 to 30 »m.

During the controlled heating carbon diffuses from the TSPCD into the coating to form a carbide layer at the coating-TSPCD interface while the outer surface of the coating remains non-carbided. If the heating at the carbide forming temperature is too long, the result is that more and more of the carbon from the PCD diffuses into the coating with possible damage to the TSPCD.

Either simultaneously with or subsequently to the formation of the carbide layer the coated TSPCD is assembled in and chemically bonded to a supporting matrix, for instance formed of powdered tungsten carbide, which may be liquid infiltrated or solid state sintered.

The term "chemical bond" is used herein to refer to the strong bonds that are formed between the diamond and the metal coating through the medium of the carbide layer at the interface, and between the exterior surface of the metal coating and the matrix carrier. While not fully understood, it is believed that the former is an atom to atom level bond between the carbon of the diamond and the carbide layer. The latter is believed to be a metallurgical bond in which the binder alloy used in the liquid state infiltration or with the sintered material of the matrix carrier if solid state sintering is used. This contrasts sharply with the mechanical bonds that were formed in the prior art systems.

In the case of liquid infiltration, the carbide forming metal bonds to the matrix since the binder alloy wets the coating as well as the matrix powder. The result is a chemical bond from the TSPCD to the coating and a metallurgical bond from the outer surface portion of the coating, i.e., the non-carbided surface, to the matrix.

A solid state sintering operation (also referred to as tungsten powder activated sintering) involves vacuum sintering or sintering in a controlled atmosphere. If processed by solid state sintering, the materials used for coating have to be adjusted to reflect the different but related processing. Since this form of processing does not use a binder for matrix formation, a portion of the coating wets the powder and bonds to the powder during sintering, forming a chemical bond.

### Brief Description of the Drawings

Figure 1 is a flow chart depicting the steps in formation of a TSPCD product in accordance with the present invention;
Figure 2 is a sectional view illustrating the carbide layer which is formed in the coating in accordance with this invention;
Figure 3 is an enlarged fragmentary view, partly in section and partly in elevation, illustrating the improved bonding between the TSPCD element and the support matrix in accordance with this invention;
Figure 4 is a view in perspective of a TSPCD element bonded to a support structure in accordance with this invention;
Figures 5a-5d are diagrammatic views of various structures and the test protocol for three point testing;
Figure 6 is a graph illustrating the relationship between bond strength and coating thickness, in accordance with this invention, and
Figure 7 is a plan view of one form of TSPCD product in accordance with this invention;
Figure 8 is a sectional view as seen along the line 8-8 of Figure 7.

### Detailed Description of the Invention

In accordance with this invention the starting diamond material is preferably a temperature stable polycrystalline diamond material composed of aggregate diamond particles, for example, having sizes in the range of submicrometers to over 100 »m. The TSPCD should contain at least 60% by volume of diamond aggregates and the product may be leached or unleached with some diamond to diamond bonding or diamond-metal-diamond bonding in the aggregate.

The TSPCD element may be as small as 250 »m, i.e., .254 mm (10 mils) and as large as one carat or more. It is preferred that the size of the starting TSPCD be above 1,000 »m, i.e., one millimeter, since pieces of this size are easier to handle.

In some instances the smaller particle sizes of TSPCD material below 250 to 1,000 »m may be used as a grit with the larger TSPCD elements in order to provide a diamond impregnated support.

It is preferred that the "TSPCD" starting material be of predetermined geometrical shapes to simplify the arrangement of the TSPCD elements in the desired relationships for processing.

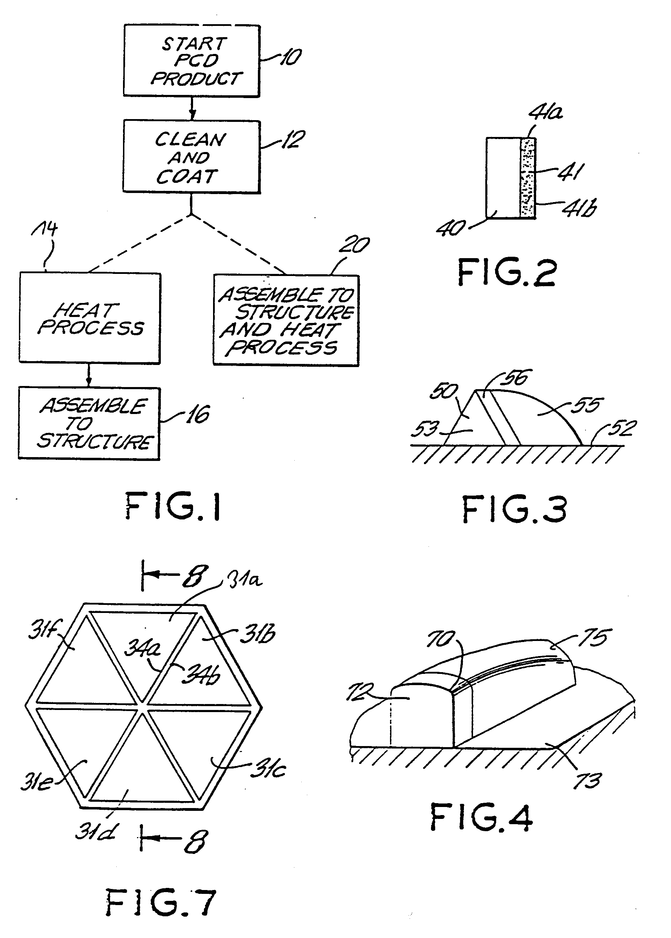

In the processing in accordance with this invention, as illustrated in the flow chart of Figure 1, the starting TSPCD material 10 is preferably cleaned by heating in hydrogen at about 800 to 1,000 degrees C. for about 10 to 60 minutes as indicated at 12. Other cleaning procedures may be used provided they are effective to remove oxidants and other surface debris. Thereafter the cleaned TSPCD material is surface coated with a metal by any one of several known procedures. A preferred procedure is chemical vapor deposition. Another procedure which may be used is fused salt bath deposition. The metal used should be a strong carbide former such as any one of the Group IVa, Va, VIa, VIII metals and alloys and mixtures thereof and silicon. Tungsten, tantalum and molybdenum and especially tungsten are preferred. The transition metals of Group IVa, Va, and VIa form carbides of the MC type, where M may be Ti, Zr, Hf, V, Nb,Ta, Mo and W , and M2C where M may be V,Mo or W.

As a class, these materials have a melting point higher than the temperatures used in subsequent processing, are strong carbide formers and form a strong bond to the diamond and to the coating material. Metals such as cobalt, iron and nickel are less preferable because of the tendency to back convert the TSPCD to carbon and possibly to cause thermal stress cracks. Zirconium and titanium may be used but are less preferred because they have a volume expansion at elevated temperatures which is more than that of diamond (but less than that of cobalt and iron), and are subject to oxidation damage in subsequent processing in normal atmospheres unless protected by an overcoating. With such double coated products, care must be taken to assure that the carbide containing coating is sufficiently thick to prevent penetration by the surrounding metal should the protective coating migrate or be dissolved off the carbide forming coating.

A coating which is not chemically bonded to the PCD does not produce the advantages of this invention. If the coating is too thin or oxidation sensitive, there may be problems in later processing in an oxidizing environment. For coatings which are too thin, the binder of the matrix may penetrate through the coating and damage the PCD. For example, matrix infiltration procedures for earth boring bits usually includes processing at about 1,200 degrees C. for between 15 to 20 minutes in a graphite mold.

The base coating is entirely converted to a carbide by appropriate heating to the carbide forming temperature for a sufficient time to convert the entire coating to a carbide, an outer protective coating is required for instance of nickel or copper, which should be sufficiently thick to protect the carbide layer. Otherwise the binder used in infiltration may penetrate the carbide coating and damage the PCD.

For chemical vapor deposition one may use the hexahalides, tetrahalides, pentahalides, e.g., the hexa-, tetra- and penta- forms of the bromides, chlorides, fluorides of the metals mentioned. The thickness dimension of the coating on the TSPCD may vary, but it is preferred that the coating be between about 10 to 30 »m in thickness.

Of the carbide forming materials described, tungsten is preferred for several reasons. It is a strong carbide former, has a coefficient of thermal expansion which is closer to that of the TSPCD than the remaining transition element, is not subject to excessive oxidation damage during later processing, and is not easily dissolved by the liquid binder alloys during infiltration.

If the surface of the coated TSPCD is oxidized a gap may be formed between the coated TSPCD and the surrounding matrix because of the non-wetting character of the oxidized surface with respect to the binder of the matrix. The presence of a gap between the coating and the surround structure results in a marked reduction in the strength of the bond between the TSPCD and the matrix.

Further, if the matrix or infiltrant includes copper or nickel or alloys thereof, the reaction between the matrix or infiltrant and a copper or nickel oxidation protective layer over an oxidizable carbide forming layer does not produce as strong a bond as is the case with an exposed outer surface of tungsten.

Even so, the use of materials such as titanium and zirconium may be acceptable provided those coatings are sufficiently thick to essentially prevent adverse reactions which cause damage to the carbide containing layer or to the underlying diamond material. Above about 3 »m tend to provide improved bonding, but not as great as that provided by tungsten.

At this point in the processing, alternate processing routes are available, as indicated in the dotted lines of Figure 1. In one form, the coated parts are heat processed, as indicated at 14 to form a relatively thin carbide layer of the carbide forming coating. The dimension of the carbide layer is thinner than the dimension of the coating and less than 10 »m and preferably less than 5 »m in thickness.

The carbide formation may be achieved by controlled heating to above 900 degrees C. in a vacuum, inert or reducing atmosphere. For example, a vacuum of 1,33·10⁻⁶ mbar (10 to the minus 6 torr), or a protective atmosphere may be used and the part or parts heated for about one hour at 1,200 degrees C.

During this heating operation, which is at carbide forming conditions, a portion of the carbon from the TSPCD diffuses into the coating and there is diffusion of the coating into the TSPCD to form a relatively thin carbide layer at the TPSCD-coating interface. The resulting TSPCD element is one having an outer surface coating off the metal coating chemically bonded to an intermediate carbide layer and, which in turn, is chemically bonded to the base TSPCD. The presence of the outer metal coating enables the thus formed part to be brazed to a suitable support, if desired, since there is a metal coating which is chemically bonded to the carbide and which in turn is chemically bonded to the underlying TSPCD.

The thus formed TSPCD element may be bonded in or to a matrix by either solid state sintering or liquid state infiltration, as indicated at 16 of Figure 1.

In the case of solid state sintering, the coated TSPCD element having the carbide layer described is sintered to a support such as powdered tungsten in a vacuum furnace at 1,33·10⁻⁶ mbar (10 to the minus 6 torr), at 1200 degrees C for about 1 hour. To promote chemical bonding at the stated temperature, the powdered material to be sintered is preferably admixed with an activator. The resulting sintered product has a bond between the tungsten material with the tungsten coating on the TSPCD, i.e., a tungsten-tungsten metal bond. It is for this reason that the nickel or other activator is used to promote diffusion and chemical bonding. The mechanical properties of this bond are quite strong, and the finished product, although somewhat brittle is quite useable.

There are, however, some limitations of solid state sintering. For example, the limitation of sintering at a temperature below 1,200 degrees C. renders it difficult to find a material with high strength and high modulus and which can be sintered below 1,200 degrees C. Even if the high modulus materials can be sintered below about 1,200 degrees C., as by activation sintering, the sintered product may contain 5% or more porosity which may act as pre-existing cracks.

It is preferred to use liquid phase infiltration to form the matrix. In this technique, usually in a graphite mold, the coated and carbide layer containing thermally stable PCD element is placed in contact with matrix powder and heated to cause a metal binder to flow through the powder and bind the matrix powder together. It is in this step that the metallurgical bond is formed between the matrix and the coated and carbide containing coating on the TSPCD.

The matrix powder used for liquid state infiltration carbide may be, for example, tungsten carbide, titanium carbide, tantalum carbide or silicon carbide. The metal binder material is preferably a low melting point metal binder which in a liquid state can wet the coating on the TSPCD and the carbide particules. It is also preferred that the binder metal have good mechanical properties such as ductility and strength. Typical such binders are copper or nickel based brazing alloys or copper-tin-manganese-nickel alloys, the latter being the preferred binder material.

The alternate form of processing, as illustrated in Figure 1 at 20, involves assembling the coated TSPCD to a supporting structure to effect formation of the carbide layer in the coating and to bond the coated TSPCD to the supporting structure. In this form of processing the supporting structure is not as dense as will be hereinafter described with regard to a compacted matrix carrier but is quite satisfactory for various products such as oil and gas drill and core bits.

Referring to the drawings which illustrate preferred forms of the present invention, Figure 2 illustrates the TSPCD element 40 having a coating 41 of a carbide forming material on at least one surface thereof. After processing in the carbide forming range of temperatures and under carbide forming conditions, the coating 41 is composed of basically two parts, 41a being the relatively thin formed carbide layer adjacent to and chemically bonded to the surface of the TSPCD and portion 41b being that portion of the layer which has not been converted to a carbide, but which is chemically bonded to the carbide layer.

In Figure 3, the coated TSPCD 50 is assembled to a matrix support, as for example a matrix body bit 52. Essentially the entire face 53 of the triangular element is above the matrix. This arrangement is possible because in accordance with this invention, there is a metallurgical bond between the surfaces of the TSPCD in contact with the matrix and the opposed surfaces of the matrix. While a backing structure 55 is illustrated, both the side faces 56 and the front face 53 are fully exposed. In this way, the cutter may be mounted such that there is total full face exposure.

The coated TSPCD 50 may be assembled in a mold in the usual fashion and matrix powder placed in the mold followed by infiltration at an elevated temperature at which time the carbide layer is formed in the coating and the layer bonds metallurgically to the matrix to form a strong bond.

In the form illustrated in Figure 4, the coated TSPCD element 70 is illustrated as essentially finger-nail in shape, with an axial dimension of more than 13mm and a transverse dimension of 13mm. Essentially the entire front face 72 is exposed above the body or supporting matrix 73 and the backing 75 is provided to resist fracture due to impact loads. The TSPCD element 70 may be assembled as already described, with the carbide layer being preformed or formed in situ as the bit is impregnated during body formation.

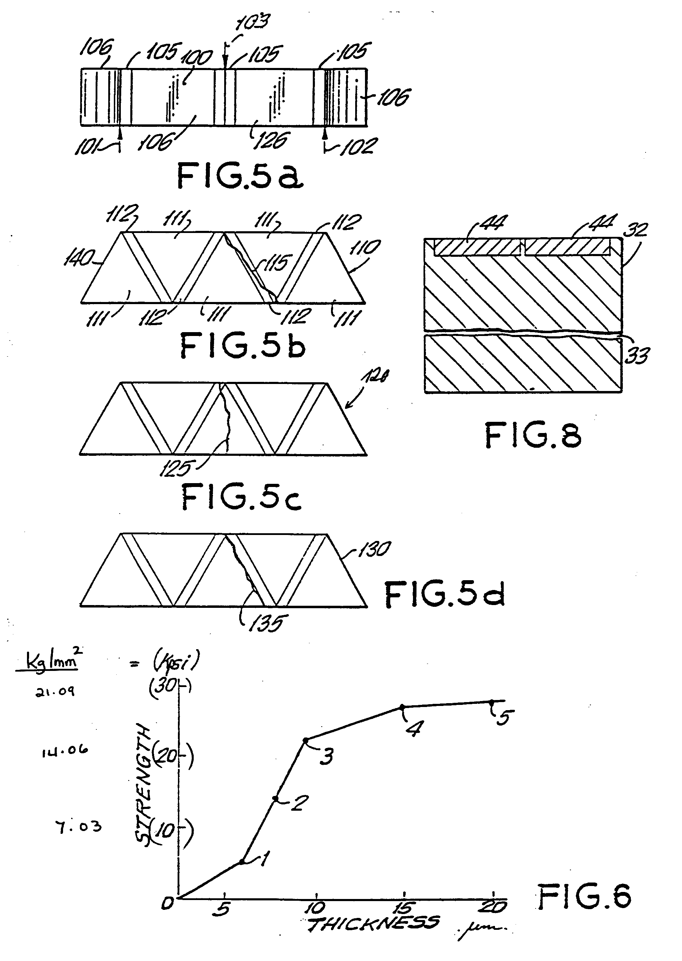

The products of the present invention are much stronger than previous products. Referring to Figures 5a to 5d, Figure 5a illustrates diagrammatically a three point bending test in which loads are applied to a part 100 in one direction as indicated by the arrows 101 and 102 and a load is applied in another direction as indicated by the arrow 103. The force necessary to bring about fracture through the joint 105 or through the joined parts 106 is measured and expressed in terms of kg/mm² (pounds per square inch) to failure.

Figure 5b illustrates a TSPCD assembly 110 in accordance with this invention made up of triangular TSPCD elements 111 joined together as indicated at the joints 112 by the methods already described. The part 110 was found by sintering tungsten coated 3 per carat TSPCD elements with tungsten powder which had been compressed to a volume percentage of 90%. In the three point test, the failure mode was in the joint between adjacent elements, as indicated at 115. The load to failure was 14.77 kg/mm² (21,000 psi).

Figure 5c is similar in structure to that of Figure 5b, but the part 120 was formed from tungsten coated 3 per carat TSPCD elements which were liquid state infiltrated with tungsten carbide using a copper binder, as described, and processed as described. In the three point test, the failure mode was through the TSPCD as indicated at 125 and the load to failure was 18.28 kg/mm² (26,000 psi).

Figure 5d illustrates a mechanical mosaic structure 130 which is essentially the same as 120, but in which the TSPCD elements were not coated and in which the part was processed using conventional infiltration techniques with the same tungsten carbide and binder used to form the part 120. In the three point test, the failure was through the joint, as indicated at 135, and the load to failure was essentially zero psi (1 psi ≙ 7,03 x 10⁻⁴ kg/mm²).

Referring to Figure 6, thickness of the coating in »m is plotted as the abscissa and bond strength, in kg/mm² (thousands of pounds per square inch), as the ordinate. The data points on the graph are actual test results from samples made and tested. The test protocol involved bonding the coated part to a matrix support structure and using a shear tool to push sideways and measuring the force to fracture. These data were for tungsten coated 3 per carat triangular TSPCD elements, unless otherwise indicated .

Data point 1 represents a 6»m tungsten coating and a bond strength of about 3,52 kg/mm² (5,000 psi). Data point 2 represents a 7 »m titanium carbide coating with a nickel overcoating of between 30 and 50 »m,
The fracture mode of materials on the line below data point 1 is through the coating.

Data point 3 represents a 9 »m tungsten coating with a bond strength of about 16.17 kg/mm² (23,000 psi). The failure mode of the sample falling on the line between data points 1 and 3 was mixed, i.e., some through the coating and some by fracture through the TSPCD. Data points 4 represents a 15 »m tungsten coating with a bond strength of about 19.69 kg/mm² (28,000 psi) while data point 5 represents a 20 »m coating and a bond strength of about 20.39 kg/mm² (29,000 psi). In each case, 4 and 5 the fracture was through the TSPCD. As is seen the curve tends to become flat in the region after data point 4 thus indicating that increasing the thickness of the coating above about 20 »m does not significantly improve the bond strength. The data indicate that above about 10 »m, the fracture mode is through the TSPCD rather than through the coating. The slope of the curve between data point 1 and point 3 represents a marked increase in bond strength over the range of 6 to 10 »m, but fracture may sometimes be through the bond.

Earth boring drill bit or core bit bodies may be of any of a number of types, as is known in the art. Thus, for example, stepped bit designs may be used with a significant cutter exposure, to mention only one variant. The ability to fabricate cutters to different desired geometries as may be needed for effective cutting action in various formations is now possible in accordance with this invention.

If one or more TSPCD's are to be bonded to a matrix carrier which, for example, may be in turn bonded to a matrix of an earth boring drill bit body or other tool, it is preferred to compact the powder with the TSPCD elements in an axial compression operation.

If one or more TSPCD elements are to be bonded to a matrix carrier which, for example, may in turn be bonded to a matrix of an earth boring drill bit body or other tool, it is preferred to compress the powder and the TSPCD elements in an axial compression operation. After compacting the backing or support structure will achieve a volume percentage of metal and/or metal carbide and/or abrasive particle (e.g., oxides or non-metal carbides) which is in the range of 40% to 80%. Optionally, the compacted structure may be further compressed by isostatic pressing in which the volume percentage is increased to about 60% to 90%. If the structure is to be sintered, isostatic pressing is preferred.

The hard ceramic powders used to form the matrix carrier may be metal carbide such as tungsten carbide, titanium carbide, tantalum carbide, molybdenum carbide, and cemented tungsten carbide (tungsten carbide cemented with cobalt). Alternatively, it could be made of other hard ceramic powders such as alumina or titanium or silicon nitride. For application such as earth boring bits, where strength and toughness are important, tungsten carbide is preferred.

The particular powder used and the particle size or sizes is related to the desired volume percent of the matrix powder, the final product which in turn is related to the hardness (rigidity) and impact resistance (toughness) of the backing or support structure. Also a consideration is the type of processing, e.g., liquid state infiltration or solid state sintering.

In the case of liquid state infiltration, the hard ceramic powder, for example tungsten carbide, has a particle size which is typically below 325 mesh (Tyler), i.e., below 44 »m (Standard), for example 30 »m. The size distribution and the percentahge distribution may vary depending upon the supplier. Good packing efficiency may be obtained by appropriate selection of particle size, e.g., 30 »m and 6 »m in a ratio of 70% to 30%.

In the case of solid state sintering, for example using a tungsten powder, the powder particles are preferably coated with a metal such as nickel, for example 0.35 weight percent. This may be done by mixing tungsten powder of a particle size of 0.5 »m with a solution of nickel nitrate in alcohol, followed by heating at about 90 degrees C. to evaporate the alcohol with the result that the nickel nitrate is deposited on the tungsten powder. The nickel nitrate coated tungsten powder is then heated at 800 degrees C. for 3 hours in a reducing atmosphere (hydrogen) to eliminate the nitrate. The processed tungsten powder was then ball milled for 24 hours using tunsten rods as the milling media and then sieved and screened to 74 »m (200 mesh). The purpose of the nickel is to act as a diffusion activator for the tungsten. Other binder materials which may be used are tantalum, molybdenum, and the nickel based alloys, copper-nickel alloys and cobalt based alloys.

If the powder is to be compacted, it is preferably mixed with a temporary binder material which is used to coat the powder material to form a temporary adhesive bond between the powder particles during the initial compression step. Since this temporary binder remains in the processed product through the cold isostatic pressing operation, it should preferably be present in a relatively low volume percentage. If the volume percentage is too high, it may prevent the achievement of higher powder volume percentages in the final product. Various organic polymeric or resinous binders which are easily volatilized at elevated temperatures or resinous binders which are easily volatized at elevated temperature may be used. A preferred material is paraffin which is easily dissolved in an organic solvent. The amount of paraffin relative to the tungsten carbide is about 2 weight percent.

For compacted structures it is also desirable to use a lubricant which may be volatilized completely at elevated temperatures in order to facilitate powder movement during the various pressing operations, especially the optional cold isostatic pressing operation. One such material is mineral oil which may also be dissolved with the temporary binder to coat the powder. A typical useable amount is 20 grams of paraffin per 1,000 grams of cast carbide in 0.2 grams of glycerine per 1,000 grams of cast carbide.

The powder is dispersed into the solution of the temporary binder and lubricant in hexane (for the paraffin) and the binder and lubricant coat the powder which is then dried and reground into a powder. Other coating procedures may be used as is known in the art.

If the product is to contain multiple TSPCD elements it is preferred to use a template or die configured to position the TSPCD elements with respect to each other. The spacing between adjacent TSPCD elements may vary widely, depending upon tee configuration and nature of the final product. Where the part includes multiple TSPCD pieces, the side faces of the TSPCD elements may be spaced from each other in the desired relationship for instance as illustrated in Fig. 7 and provide a gap of from about less than 25 »m to 12500 »m (1 mil to 500 mils) and preferably in the range of 150 to 750 »m (6 to about 30 mils), by way of example. Thereafter, the processed powder is placed in the gaps between the adjacent TSPCD pieces and filled in in contact with the surfaces of the TSPCD elements to be bonded to the matrix or matrix carrier.

In some instances it is not necessary to form a gap as described since the TSPCD may be assembled with adjacent surface portions in contact with each other particularly where erosion is not a potential problem. If liquid state infiltration is used, the binder penetrates between the TSPCD elements and chemically bonds the adjacent coated TSPCD elements together. Where erosion is likely to be a problem, such as exposure to relatively high velocity flow or the use of abrasive materials, the use of a gap in which powder is present is preferred.

The thus assembled TSPCD-powder temporary assembly is then assembled into a mold or pressure die of suitable configuration which preferably defines the outside contour of the finished part. One manner of carrying this out is to use an open ended die, invert the die and move the temporary assembly of TSPCD elements up into the bottom of the die, re-invert the die right side up so that the assembly is in the bottom of the die and then add the processed powder material to the required volume. The amount of powder added is related to the thickness of the support or backing and the volume percentage of the metal in the final product.

If the TSPCD's are being bonded to a matrix carrier, the assembled material is axially cold compressed in a pressure die at a pressure of between 7.03 and 21.09 kg/mm² (10,000 psi and 30,000 psi) to increase the tungsten carbide packing density to about 50 to 65 volume percent. As a result of this processing, a compacted intermediate is formed which is fragile but still capable of being handled with care. If the subsequent processing is solid state sintering, pressures around 7,03 kg/mm² (10,000 psi) may be used and the resultant product has a packing density of about 50 volume percent.

An optional additional step is cold isostatic pressing in which the compacted intermediate is isostatically cold pressed at a pressure of up to about 21.09 kg/mm² (30,000 psi) for five minutes or longer, for example. The isostatic pressing typically achieves a tungsten carbide packing density of about 62 volume percent. In the case of tungsten powder in solid state sintering, the density is about 65 volume percent. During this operation, the tungsten or the carbide powders are moved and compacted uniformly to a more dense product.

Figures 7 and 8 illustrate a TSPCD product 30 which includes six of initially separated TSPCD elements 31a to 31f of generally triangular shape. The TSPCD elements may be bonded together in or on a support structure indicated schematically at 32, which may be an infiltrated or sintered powdered material. The support structure may be of various dimensions and of various axial lengths, as indicated by the break line 33.

As seen in Figure 7 and 8, the TSPCD elements include at least one side face 34a which may be positioned adjacent to but spaced a small distance from the side face 34b of the adjacent TSPCD element. A cutter formed by this technique acts in effect as one formed of a single large TSPCD, thus permitting a larger cutter to be fabricated from smaller TSPCD's.

Typical processing of TSPCD elements in accordance with this invention is set forth in the following specific example, by way of illustration.

Triangular temperature stable TSPCD elements of a size of 3 per carat were coated with tungsten metal, as described, to a thickness of about 6 »m. The coated elements were then heated in a vacuum furnace [1,33 x 10⁻² mbar (10 to the minus 2 torr or in and argon atmosphere)] at the rate of 2 degrees C per minute up to 1,100 degrees C for one hour followed by cooling.

Slow heating, especially from 900 degrees C to 1,100 degrees C is essential because it is at this stage of the heating that carbide formation takes place between the TSPCD and the coating. Typically the carbide layer thus formed is about 3 »m thick.

If the preform is heated quickly to 1,000 degrees C and held for 1.5 hours, the formed carbide layer is about 0.3 »m thick. Heating to the carbide forming temperature at the rate of 10 degree C per minute may also be used.

## Claims

1. An earth boring bit comprising a body, a matrix including a binder alloy or a sintered material integral with and forming the outer surface of at least a portion of said body,
at least one temperature stable polycrystalline synthetic diamond element having a temperature stability up to 1200°C, which is bonded to said matrix to form a cutter,
each said temperature stable synthetic diamond element having a coating obtained by chemical vapour deposition (CVD) or fused salt deposition of 10 to 30 »m thickness of a carbide forming metal on at least the surface thereof which is in contact with said matrix, and
said coating including an outer metal portion chemically bound to said matrix by means of a metallurgical bond and an inner carbide portion chemically bound to said diamond element by an atom to atom bond between the carbon of the diamond and the carbide layer.

2. The earth boring bit of claim 1 wherein said inner carbide portion of said coating has a thickness of less than 10 »m, preferably less than 5 »m.

3. The earth boring bit of claim 1 wherein said coating is made from a carbide forming refractory transition metal, preferably tungsten, tantalum or molybdenum.

4. The earth boring bit of claim 1 wherein said coating is a double layer coating of the group consisting of tungsten/titanium, tungsten/chromium or nickel/titanium.

5. The earth boring bit according to claim 1 wherein said support is sintered from powdered tungsten.

6. The earth boring bit according to claim 1 wherein said matrix comprises a powder selected from the group of tungsten carbide, titanium carbide, tantalum carbide or silicon carbide and a low melting point metal binder which in a liquid state can wet the coating on the synthetic diamond element and the carbide particles.

7. The earth boring bit according to claim 6 wherein the binder is a copper or nickel based brazing alloy or a copper-tin-manganese-nickel alloy.

8. The earth boring bit according to claim 1 in which said bit includes a plurality of said polycrystalline diamond elements bonded to said matrix forming a plurality of cutters.

9. The earth boring bit according to claim 1 wherein said matrix includes a portion forming a backing for said polycrystalline synthetic diamond cutting element.

10. The earth boring bit according to claim 1 wherein said polycrystalline synthetic diamond element includes a front face, said front face forming a cutting face and being essentially fully exposed.

11. The earth boring bit according to claim 1 wherein said carbon forming metal is tungsten and the bond between said diamond element and said matrix is able to withstand a stress of at least 16.17 kg/mm² (23,000 psi).

12. An earth boring bit according to claim 1 wherein said bit includes a plurality of said polycrystalline synthetic diamond elements, said elements having predetermined geometrical shapes, at least some of said elements being arranged adjacent one another to form a larger cutter in said bit.

13. A method of forming a temperature stable synthetic diamond product from a temperature stable synthetic diamond element having a temperature stability up to 1200°C of a predetermined geometric shape, comprising the steps of:
coating the surface of said synthetic diamond element with an oxidation resistant metallic carbide former to form a coating of more than 10 »m in thickness, and
heating said coated synthetic diamond element under carbide forming conditions to convert the portion of said coating in contact with said diamond element to a carbide layer having a thickness of less than 10 »m, preferably less than 5 »m while the outer surface of said coating remains a metal, and establishing a chemical bond between the metal and the intermediate carbide layer which is chemically bonded to the synthetic diamond element and wherein said coated synthetic diamond element is assembled with a powder material and then heated to form said carbide layer and to form said powder into a matrix.

14. The method of claim 13 wherein said chemical bond between said carbide layer and said synthetic diamond element is an atom to atom bond between the carbon of the diamond and the carbide layer.

15. The method of claim 13 or 14 wherein said coating of said carbide former has a thickness of >10 »m to 30 »m.

16. A method as set forth in any one of claims 13 to 15 wherein said metallic carbide former is tungsten.

17. A method of making a tool comprising the steps of coating the surface of a plurality of temperature stable polycrystalline synthetic diamond elements having a temperature stability of up to 1200°C, with an oxidation resistant metallic carbide former to form a coating of more than 10 »m, preferably of >10 to 30 »m in thickness,
heating said coated synthetic diamond elements under carbide forming conditions to convert the portion of said coatings in contact with said diamond elements to a carbide layer, having a thickness of less than 10 »m, preferably less than 5 »m while the outer surface of said coating remains metal, and establishing a chemical bond between said metal coating and said synthetic diamond element,
positioning the plurality of coated polycrystalline synthetic diamond elements in predetermined locations within a mold,
filling at least a portion of said mold with a hard ceramic powder, said powder being in contact with all of said polycrystalline synthetic diamond elements,
infiltrating said powder with a liquid binder alloy for bonding the particles of said powder together to form a matrix and for bonding said coated synthetic diamond elements to said matrix by metallurgical bond, the metal coating on each synthetic diamond element being chemically bonded to said synthetic diamond element.

18. A method of making a tool comprising the steps of coating the surface of a plurality of temperature stable polycrystalline synthetic diamond elements having a temperature stability of up to 1200°C with an oxidation resistant metallic carbide former to form a coating of more than 10 »m, preferably of >10 to 30 »m in thickness,
positioning the plurality of coated polycrystalline synthetic diamond elements in predetermined locations within a mold,
filling at least a portion of said mold with a hard ceramic powder, said powder being in contact with all of said polycrystalline synthetic diamond elements,
infiltrating said powder with a liquid binder alloy for bonding the particles of said powder together to form a matrix and for bonding said coated synthetic diamond elements to said matrix by metallurgical bond,
the metal coating on each synthetic diamond element being chemically bonded to said synthetic diamond elements during the infiltration of said powder with said binder alloy, by creating an intermediate carbide layer having a thickness of less than 10 »m preferably less than 5 »m, while the outer surface of said coating remains a metal.

19. The method of claim 17 or 18 wherein said metal is tungsten.

20. The method of any one of claims 17 to 19 wherein at least some of said synthetic diamond elements are arranged adjacent and bonded to one another to form a single larger cutter in said tool.

21. The method of any one of claims 17 to 19 wherein said tool is an earth boring bit and wherein the matrix is integral with and forms a part of the bond of said bit.

22. The method of claim 17 or 18 further including the step of compacting said ceramic powder to form a matrix carrier upon infiltration.

## Patentansprüche

1. Erdbohrer umfassend einen Körper, eine Matrix mit einer Binderlegierung oder einem Sintermaterial, die eine Einheit mit der äußeren Oberfläche zumindest eines Teiles des Körpers darstellt und diesen bildet,
und zumindest ein temperaturstabiles polykristallines synthetisches Diamantelement mit einer Temperaturstabilität von bis zu 1200°C, welches an die Matrix gebunden ist und eine Bohrkrone bildet,
wobei jedes temperaturstabile synthetische Diamantelement eine mittels des chemischen Aufdampfverfahrens (CVD) oder des Salzschmelzeverfahrens erhaltene Beschichtung eines carbidbildenden Metalls mit einer Dicke von 10 bis 30 »m an mindestens einer Oberfläche aufweist, welche mit der Matrix in Verbindung steht, und
wobei die Beschichtung einen äußeren Metallteil aufweist, der durch eine metallurgische Bindung chemisch an die Matrix gebunden ist, und die einen inneren Carbidteil aufweist, der durch eine Verbindung von Atom zu Atom zwischen dem Kohlenstoff des Diamanten und der Carbidschicht chemisch an das Diamentelement gebunden ist.

2. Erdbohrer nach Anspruch 1, wobei der innere Carbidteil der Beschichtung eine Dicke von weniger als 10 »m und vorzugsweise weniger als 5 »m hat.

3. Erdbohrer nach Anspruch 1, wobei die Beschichtung aus carbidbildendem, feuerfestem Übergangsmetall besteht, welches vorzugsweise Wolfram, Tantal oder Molybdän ist.

4. Erdbohrer nach Anspruch 1, wobei die Beschichtung eine Doppellagenbeschichtung der Gruppe bestehend aus Wolfram/Titan, Wolfram/Chrom oder Nickel/Titan ist.

5. Erdbohrer nach Anspruch 1, wobei die Matrix aus pulverförmigem Wolfram gesintert ist.

6. Erdbohrer nach Anspruch 1, wobei die Matrix ein aus der Gruppe bestehend aus Wolframcarbid, Titancarbid, Tantalcarbid oder Silikoncarbid ausgewähltes Pulver und ein Metallbindemittel mit niedriger Schmelztemperatur umfaßt, welches in flüssigem Zustand die Beschichtung am synthetischen Diamantelement und die Carbidpartikel benetzen kann.

7. Erdbohrer nach Anspruch 1, wobei das Bindemittel ein Hartlot auf Kupfer- oder Nickelbasis oder eine Kupfer-Zinn-Mangan-Nickel-Legierung ist.

8. Erdbohrer nach Anspruch 1, wobei der Bohrer eine Mehrzahl von polykristallinen Diamantelementen umfaßt, die an die Matrix gebunden sind und eine Mehrzahl von Schneidköpfen bilden.

9. Erdbohrer nach Anspruch 1, wobei die Matrix einen Anteil enthält, der eine Hinterfüllung für das polykristalline synthetische Diamantenschneideelement bildet.

10. Erdbohrer nach Anspruch 1, wobei das polykristalline synthetische Diamantelement eine Frontfläche hat, die eine Schneidefläche bildet und die im wesentlichen vollständig frei liegt.

11. Erdbohrer nach Anspruch 1, wobei das carbidbildende Metall Wolfram ist und die Verbindung zwischen dem Diamantelement und der Matrix einer Belastung von mindestens 16,17 kg/mm² (23.000 psi) widerstehen kann.

12. Erdbohrer nach Anspruch 1, wobei der Bohrer eine Mehrzahl von polykristallinen synthetischen Diamantelementen einschließt, diese Elemente vorherbestimmte geometrische Formen haben, zumindest einige der Elemente nebeneinander angeordnet sind und so einen größeren Schneidkopf im Bohrer bilden.

13. Verfahren zur Herstellung eines temperaturstabilen synthetischen Diamantprodukts aus einem temperaturstabilen synthetischen Diamantelement mit einer Temperaturstabilität von bis zu 1200°C mit einer vorherbestimmten geometrischen Form, welches folgende Schritte umfaßt:
Beschichtung der Oberfläche des synthetischen Diamantelements durch einen oxidationsbeständigen metallischen Carbidbildner zur Bildung einer Beschichtung mit einer Dicke von mehr als 10 »m, und
Erhitzung des beschichteten synthetischen Diamantelements unter carbidbildenden Bedingungen, um jenen Teil der Beschichtung, die mit dem Diamantelement in Verbindung steht, in eine Carbidschicht mit einer Dicke von weniger als 10 »m und vorzugsweise weniger als 5 »m umzuwandeln, während die äußere Oberfläche der Beschichtung ein Metall bleibt, und
Bildung einer chemischen Bindung zwischen dem Metall und der dazwischenliegenden Carbidschicht, die chemisch an das synthetische Diamantelement gebunden ist, und
wobei das beschichtete synthetische Diamantelement mit einem Pulvermaterial zusammengesetzt und dann erhitzt wird, um die Carbidschicht zu bilden und das Pulver in eine Matrix umzuformen.

14. Verfahren nach Anspruch 13, wobei die chemische Bindung zwischen der Carbidschicht und dem synthetischen Diamantelement eine Verbindung von Atom zu Atom zwischen dem Kohlenstoff des Diamanten und der Carbidschicht ist.

15. Verfahren nach Anspruch 13 oder 14, wobei die Beschichtung des Carbidbildners eine Dicke von >10 »m bis 30 »m hat.

16. Verfahren nach einem der Ansprüche 13 bis 15, wobei der metallische Carbidbildner Wolfram ist.

17. Verfahren zur Herstellung eines Werkzeugs, welches die folgenden Schritte umfaßt:
Beschichtung der Oberfläche einer Mehrzahl von temperaturstabilen polykristallinen synthetischen Diamantelementen mit einer Temperaturstabilität von bis zu 1200°C durch einen oxidationsbeständigen metallischen Carbidbildner zur Bildung einer Beschichtung mit einer Dicke von mehr als 10 »m und vorzugsweise >10 bis 30 »m, und
Erhitzung des beschichteten synthetischen Diamantelements unter carbidbildenden Bedingungen, um jenen Teil der Beschichtung, der mit den Diamantelementen in Verbindung steht, in eine Carbidschicht mit einer Dicke von weniger als 10 »m und vorzugsweise weniger als 5 »m umzuwandeln, während die äußere Oberfläche der Beschichtung Metall bleibt, und Bildung einer chemischen Bindung zwischen der Metallbeschichtung und dem synthetischen Diamantelement,
Positionierung der Mehrzahl von beschichteten polykristallinen synthetischen Diamantelementen an vorherbestimmte Stellen innerhalb einer Form,
Auffüllen zumindest eines Teiles der Form mit einem Hartkeramikpulver, wobei das Pulver mit allen polykristallinen synthetischen Diamantelementen in Verbindung steht, und
Tränken des Pulvers mit einer flüssigen Binderlegierung zur Verbindung der Partikel des Pulvers untereinander zur Bildung einer Matrix und zur Bindung der beschichteten synthetischen Diamantelemente an die Matrix durch eine metallurgische Bindung, wobei die Metallbeschichtung an jedem synthetischen Diamantelement chemisch an das synthetische Diamantelement gebunden ist.

18. Verfahren zur Herstellung eines Werkzeugs, welches die folgenden Schritte umfaßt:
Beschichtung der Oberfläche einer Mehrzahl von temperaturstabilen polykristallinen synthetischen Diamantelementen mit einer Temperaturstabilität von bis zu 1200°C mit einem oxidationsbeständigen metallischen Carbidbildner zur Bildung einer Beschichtung mit einer Dicke von mehr als 10 »m, vorzugsweise >10 bis 30 »m,
Positionierung der Mehrzahl von beschichteten polykristallinen synthetischen Diamantelementen an vorherbestimmte Stellen innerhalb einer Form,
Auffüllen zumindest eines Teiles der Form mit einem Hartkeramikpulver, wobei das Pulver mit allen polykristallinen synthetischen Diamantelementen in Verbindung steht,
Tränken des Pulvers mit einer flüssigen Binderlegierung zur Bindung der einzelnen Partikel des Pulvers untereinander zur Bildung einer Matrix und zur Bindung der beschichteten synthetischen Diamantelemente an die Matrix durch eine metallurgische Bindung, und
die Metallbeschichtung an jedem synthetischen Diamantelement während des Tränkens des Pulvers mit der Binderlegierung an die synthetischen Diamantelemente gebunden wird, indem eine dazwischenliegende Carbidschicht gebildet wird, die eine Dicke von weniger als 10 »m, vorzugsweise weniger als 5 »m, hat, während die äußere Oberfläche der Beschichtung ein Metall bleibt.

19. Verfahren nach Anspruch 17 oder 18, wobei das Metall Wolfram ist.

20. Verfahren nach einem der Ansprüche 17 bis 19, wobei zumindest einige der synthetischen Diamantelemente nebeneinander angeordnet und aneinander gebunden sind und so einen einzigen größeren Schneidkopf an dem Werkzeug bilden.

21. Verfahren nach einem der Ansprüche 17 bis 19, wobei das Werkzeug ein Erdbohrer ist und die Matrix eine Einheit mit dem Körper des Bohrers darstellt und einen Teil desselben bildet.

22. Verfahren nach Anspruch 17 oder 18, weiters einschließend den Schritt des Verdichtens des Keramikpulvers, um bei der Durchtränkung einen Matrixträger zu bilden.

## Revendications

1. Couronne de forage du sol constituée par un corps, une matrice comprenant un alliage de liaison ou un matériau fritté d'une seule pièce avec, et formant la surface externe de, au moins une partie dudit corps,
au moins un élément en diamant synthétique polycristallin, stable en température, ayant une stabilité en température allant jusqu'à 1200°C, qui est lié à ladite matrice pour former un élément de coupe,
chacun desdits éléments en diamant synthétique stable en température étant pourvu d'un revêtement, obtenu par dépôt chimique en phase vapeur (CVD) ou dépôt en bain de sel fondu, d'une épaisseur de 10 à 30 »m, constitué d'un métal générateur de carbure, sur au moins sa surface en contact avec ladite matrice, et
ledit revêtement comprenant une portion métallique externe liée chimiquement à ladite matrice au moyen d'une liaison métallurgique et une portion de carbure interne liée chimiquement audit élément en diamant par une liaison d'atome à atome entre le carbone du diamant et la couche de carbure.

2. Couronne de forage du sol selon la revendication 1, dans laquelle ladite portion de carbure interne dudit revêtement a une épaisseur inférieure à 10 »m, de préférence inférieure à 5 »m.

3. Couronne de forage du sol selon la revendication 1, dans laquelle ledit revêtement est fabriqué à partir d'un métal de transition réfractaire générateur de carbure, de préférence du tungstène, du tantale ou du molybdène.

4. Couronne de forage du sol selon la revendication 1, dans laquelle ledit revêtement est un revêtement à double couche choisi dans le groupe consistant en le tungstène/titane, le tungstène/chrome et le nickel/titane.

5. Couronne de forage du sol selon la revendication 1, dans laquelle ladite matrice est frittée à partir de tungstène pulvérulent.

6. Couronne de forage du sol selon la revendication 1, dans laquelle ladite matrice est constituée d'une poudre choisie dans le groupe formé par le carbure de tungstène, le carbure de titane, le carbure de tantale ou le carbure de silicium et un liant métallique à bas point de fusion qui peut mouiller à l'état liquide le revêtement sur l'élément en diamant synthétique et les particules de carbure.

7. Couronne de forage du sol selon la revendication 6, dans laquelle le liant est un alliage de brasure à base de cuivre ou de nickel ou un alliage cuivre-étain-manganèse-nickel.

8. Couronne de forage du sol selon la revendication 1, dans laquelle ladite couronne comprend une pluralité desdits éléments en diamant polycristallin liés à ladite matrice pour former une pluralité d'éléments de coupe.

9. Couronne de forage du sol selon la revendication 1, dans laquelle ladite matrice comprend une portion formant un support pour ledit élément de coupe en diamant synthétique polycristallin.

10. Couronne de forage du sol selon la revendication 1, dans laquelle ledit élément en diamant synthétique polycristallin comprend une surface frontale, ladite surface frontale formant une surface de coupe et étant essentiellement totalement découverte.

11. Couronne de forage du sol selon la revendication 1, dans laquelle ledit métal générateur de carbure est le tungstène et la liaison entre ledit élément en diamant et ladite matrice est capable de supporter une contrainte d'au moins 16,17 kg/mm² (23.000 livres/pouce²).

12. Couronne de forage du sol selon la revendication 1, dans laquelle ladite couronne comprend une pluralité desdits éléments en diamant synthétique polycristallin, lesdits éléments ayant des formes géométriques prédéterminées, au moins certains desdits éléments étant disposés adjacents les uns aux autres pour former un plus grand élément de coupe dans ladite couronne.

13. Procédé de formation d'un produit en diamant synthétique stable en température à partir d'un élément en diamant synthétique stable en température, ayant une stabilité en température allant jusqu'à 1200°C, de forme géométrique prédéterminée, comprenant les étapes consistant a :
revêtir la surface dudit élément en diamant synthétique d'un générateur de carbure métallique résistant à l'oxydation pour former un revêtement d'une épaisseur supérieure à 10 »m, et
chauffer ledit élément en diamant synthétique revêtu dans des conditions de formation de carbure pour transformer la portion dudit revêtement en contact avec ledit élément en diamant en une couche de carbure ayant une épaisseur inférieure à 10 »m, de préférence inférieure à 5 »m, tandis que la surface externe dudit revêtement reste métallique, et établir une liaison chimique entre le métal et la couche de carbure intermédiaire qui est liée chimiquement à l'élément en diamant synthétique,
procédé dans lequel ledit élément en diamant synthétique revêtu est assemblé à un matériau pulvérulent puis chauffé pour former ladite couche de carbure et pour transformer ladite poudre en une matrice.

14. Procédé selon la revendication 13, dans lequel ladite liaison chimique entre ladite couche de carbure et ledit élément en diamant synthétique est une liaison d'atome à atome entre le carbone du diamant et la couche de carbure.

15. Procédé selon la revendication 13 ou 14, dans lequel ledit revêtement constitué dudit générateur de carbure a une épaisseur comprise entre 10 (borne exclue) et 30 »m.

16. Procédé selon l'une quelconque des revendications 13 à 15, dans lequel ledit générateur de carbure métallique est du tungstène.

17. Procédé de fabrication d'un outil comprenant les étapes consistant à revêtir la surface d'une pluralité d'éléments en diamant synthétique polycristallin, stables en température, ayant une stabilité en température allant jusqu'à 1200°C, avec un générateur de carbure métallique résistant à l'oxydation pour former un revêtement d'une épaisseur supérieure à 10 »m, de préférence comprise entre 10 (borne exclue) et 30 »m,
chauffer lesdits éléments en diamant synthétique revêtus dans des conditions de formation de carbure pour transformer la portion desdits revêtements en contact avec lesdits éléments en diamant en une couche de carbure, ayant une épaisseur inférieure à 10 »m, de préférence inférieure à 5 »m, tandis que la surface externe dudit revêtement reste métallique, et établir une liaison chimique entre ledit revêtement métallique et ledit élément en diamant synthétique,
positionner la pluralité d'éléments en diamant synthétique polycristallin revêtus en des emplacements prédéterminés à l'intérieur d'un moule,
remplir au moins une partie dudit moule avec une poudre céramique dure, ladite poudre étant en contact avec tous lesdits éléments en diamant synthétique polycristallin,
infiltrer ladite poudre avec un alliage de liaison liquide pour lier les particules de ladite poudre les unes aux autres, afin de former une matrice, et pour lier lesdits éléments en diamant synthétique revêtus à ladite matrice par une liaison métallurgique, le revêtement métallique sur chacun desdits éléments en diamant synthétique étant lié chimiquement audit élément en diamant synthétique.

18. Procédé de fabrication d'un outil comprenant les étapes consistant à revêtir la surface d'une pluralité d'éléments en diamant synthétique polycristallin, stables en température, ayant une stabilité en température allant jusqu'à 1200°C, avec un générateur de carbure métallique résistant à l'oxydation pour former un revêtement d'une épaisseur supérieure à 10 »m, de préférence comprise entre 10 (borne exclue) et 30 »m,
positionner la pluralité d'éléments en diamant synthétique polycristallin revêtus en des emplacements prédéterminés à l'intérieur d'un moule,
remplir au moins une partie dudit moule avec une poudre céramique dure, ladite poudre étant en contact avec tous lesdits éléments en diamant synthétique polycristallin,
infiltrer ladite poudre avec un alliage de liaison liquide pour lier les particules de ladite poudre les unes aux autres, afin de former une matrice, et pour lier lesdits éléments en diamant synthétique revêtus à ladite matrice par une liaison métallurgique,
le revêtement métallique sur chacun desdits éléments en diamant synthétique étant lié chimiquement audit élément en diamant synthétique, au cours de l'infiltration de ladite poudre avec ledit alliage de liaison, en créant une couche de carbure intermédiaire ayant une épaisseur inférieure à 10 »m, de préférence inférieure à 5 »m, tandis que la surface externe dudit revêtement reste métallique.

19. Procédé selon la revendication 17 ou 18, dans lequel ledit métal est le tungstène.

20. Procédé selon l'une quelconque des revendications 17 à 19, dans lequel au moins certains desdits éléments en diamant synthétique sont disposés adjacents et liés les uns aux autres pour former un élément de coupe plus large et unique dans ledit outil.

21. Procédé selon l'une quelconque des revendications 17 à 19, dans lequel ledit outil est une couronne de forage du sol et dans lequel la matrice est d'un seul tenant avec le, et forme une partie du, corps de ladite couronne.

22. Procédé selon la revendication 17 ou 18, comprenant en outre l'étape consistant à compacter ladite poudre céramique pour former un porteur matriciel lors de l'infiltration.
